# NEUE EUROPÄISCHE PATENTSCHRIFT

(11) **EP 1 277 378 B2**
(45) Veröffentlichungstag und Bekanntmachung des Hinweises auf die Entscheidung über den Einspruch: **05.10.2011**
(45) Hinweis auf die Patenterteilung: 07.02.2007
(21) Anmeldenummer: 01915327.9
(22) Anmeldetag: 13.03.2001
(51) Int. Cl.: H05K 7/14, H01H 47/00

(54) **SICHERHEITSSCHALTGERÄTE-MODULANORDNUNG**
SAFETY SWITCHING DEVICE MODULE ARRANGEMENT
SYSTEME MODULAIRE A DISPOSITIFS DE COMMUTATION DE SECURITE

(30) Priorität: 22.04.2000 DE 10020075
(43) Veröffentlichungstag der Anmeldung: 22.01.2003
(73) Patentinhaber: Pilz GmbH & Co. KG, 73760 Ostfildern (DE)
(72) Erfinder: VEIL, Richard, 70597 Stuttgart (DE)
(74) Vertreter: Duhme, Torsten
(86) Internationale Anmeldenummer: PCT/EP2001/002771
(87) Internationale Veröffentlichungsnummer: WO 2001/082668

(56) Entgegenhaltungen:
- US-A- 5 218 679
- GERÄTEHANDBUCH "SIMATIC S5: 'Automatisierungsgerät S5-95F', 01 Januar 1997, SIEMENS AG Artikel 'EWA 4 NEB 812 6220-01'

## Beschreibung

Die vorliegende Erfindung betrifft eine Verwendung einer Sicherheitsschaltgeräte-Modulanordnung mit zumindest einem Eingangsmodul zum Verarbeiten von Signalen eines Sicherheitsgebers und zum Erzeugen von Ausgangssignalen, und mit zumindest zwei Ausgangsmodulen zum Ansteuern eines Aktors, wobei das Eingangsmodul und die Ausgangsmodule in einer Reihe angeordnet sind und eine Modulreihe bilden und wobei das Eingangsmodul einem Ausgangsmodul zugeordnet ist.

Sicherheitsschaltgeräte sind allgemein bekannt. Sie dienen dazu, das Signal eines Sicherheitsgebers, beispielsweise eines Not-Aus-Schalters, eines Schutztürpositionsschalters etc. sicher auszuwerten und einen oder mehrere sichere Ausgangskontakte eines Ausgangskreises anzusteuern. Über diese Ausgangskontakte werden dann Aktoren, beispielsweise Schütze, Ventile, Motoren, gefährlicher Maschinenteile, beispielsweise Sägeblätter, Roboterarme, Hochspannungseinrichtungen etc., in einen sicheren Zustand gebracht. Die Anmelderin bietet unter dem Namen "PNOZ" eine Vielzahl von unterschiedlichen Sicherheitsschaltgeräte-Typen an. Ferner sind in "Maschinensicherheit", Winfried Gräf, Hüthig Verlag, 1997, verschiedene Varianten von Sicherheitsschaltgeräten dargestellt. Ferner ist auch aus der DE 197 36 183 C1 ein Sicherheitsschaltgerät bekannt.

In der Praxis kommt es sehr häufig vor, daß mehrere Schaltereignisse, beispielsweise das Betätigen eines Not-Aus-Schalters, das Öffnen einer Tür oder das Durchgreifen eines Lichtvorhangs beispielsweise UND-verknüpft werden müssen. Hierzu werden mehrere Sicherheitsschaltgeräte in Reihe geschaltet, wobei die Ausgangsklemmen eines Sicherheitsschaltgerätes mit den Eingangsklemmen des nachfolgenden Sicherheitsschaltgerätes verbunden werden.

In vielen Fällen wird neben der UND-Verknüpfung ein hierarchischer Aufbau der Sicherheitsschaltgeräte gewünscht, um beispielsweise mit einem Schaltereignis, beispielsweise der Not-Aus-Schalter, die gesamte Maschine still zu setzen und mit anderen Schaltereignissen, beispielsweise einem Schutztürschalter, nur einen bestimmten Motor der gesamten Maschine zum Stillstand zu bringen. Ein solcher hierarchischer Aufbau ist bisher über eine entsprechende Verdrahtung möglich und hat sich in der Praxis durchaus bewährt.

Dennoch bleibt der Wunsch, einen einfacheren und preiswerteren Aufbau ohne Einschränkung der Sicherheit zu ermöglichen.

Vor diesem Hintergrund besteht die Aufgabe der vorliegenden Erfindung darin, eine flexible Verknüpfung der eingesetzten Sicherheitsschaltgeräte zu ermöglichen, ohne eine zusätzliche Verdrahtung der einzelnen Sicherheitsschaltgeräte vornehmen zu müssen.

Die der Erfindung zugrunde liegende Aufgabe wird mit einer Verwendung nach Anspruch 1 gelöst.

Mit der erfindungsgemäßen Verwendung ist es also möglich, die Zuordnung des Eingangsmoduls zu einem oder beiden Ausgangsmodulen auszuwählen, indem das Eingangsmodul an einer bestimmten Position innerhalb der Modulreihe vorgesehen wird. Im Rahmen dieser Erfindung ist unter dem Begriff "Zuordnung" zu verstehen, daß eine Signalverbindung direkter oder indirekter Art zwischen dem Eingangsmodul und dem "zugeordneten" Ausgangsmodul besteht, so daß das Ausgangsmodul den angeschlossenen Aktor abhängig von dem Ausgangssignal des zugeordneten Eingangsmoduls steuert.

Der Benutzer der Sicherheitsschaltgeräte-Modulanordnung ist somit in der Lage, ein System nach seinen Bedürfnissen modular aufzubauen, indem er die Zuordnung der Eingangsmodule zu den Ausgangsmodulen und damit die Verknüpfung der Signale der Sicherheitsgeber frei wählen kann. Das Eingangsmodul kann abhängig von seiner Position innerhalb der Modulreihe auf das erste Ausgangsmodul, auf das zweite Ausgangsmodul oder auf beide Ausgangsmodule wirken. Ein auf beide Ausgangsmodule wirkendes (zugeordnetes) Eingangsmodul dient zur zentralen Betätigung beider Ausgangsmodule, während die Zuordnung eines Eingangsmoduls zu einem einzelnen Ausgangsmodul nur dieses betätigt.

Die erfindungsgemäße Verwendung ermöglicht folglich dem Benutzer einen sehr flexiblen und einfachen Aufbau eines Sicherheitsschaltgeräte-Systems, bei dem die Sicherheitsschaltgeräte unterschiedlich miteinander verknüpfbar sind, wobei die Verknüpfung selbst durch die entsprechende Auswahl der Position des Eingangsmoduls innerhalb der Modulreihe festgelegt wird, ohne eine Änderung der Verdrahtung durchführen zu müssen.

In einer Weiterbildung sind zumindest drei Eingangsmodulplätze zur Aufnahme von jeweils einem Eingangsmodul und zumindest ein erster und ein zweiter Ausgangsmodulplatz zur Aufnahme von jeweils einem Ausgangsmodul vorgesehen, wobei zumindest ein Eingangsmodulplatz dem ersten Ausgangsmodulplatz, zumindest ein weiterer Eingangsmodulplatz dem zweiten Ausgangsmodulplatz und zumindest ein weiterer Eingangsmodulplatz dem ersten und dem zweiten Ausgangsmodulplatz zugeordnet ist.

Bei dieser Ausgestaltung sind also feste Modulplätze vorgesehen, beispielsweise in einem Gehäuse, die beispielsweise über eine feste Verdrahtung mit Ausgangsmodulplätzen verbunden sind. Anhand einer Zuordnungstabelle kann der Benutzer entsprechend seinen Bedürfnissen Eingangsmodule durch Auswahl der geeigneten Eingangsmodulplätze bestimmten Ausgangsmodulen zuordnen. Aufgrund der festen Zuordnung von Eingangsmodulplätzen zu Ausgangsmodulplätzen läßt sich ein einfacher Aufbau realisieren, der ohne Steuerungsmodule etc. auskommt.

Bei einer Weiterbildung weist jeder Eingangsmodulplatz einen Ausgangsanschluß und jeder Ausgangsmodulplatz einen Eingangsanschluß auf, wobei entsprechend der Zuordnung von Eingangsmodul- zur Ausgangsmodulplätzen eine elektrische Verbindung zwischen dem jeweiligen Ausgangsanschluß des Eingangsmodulplatzes und dem Eingangsanschluß des Ausgangsmodulplatzes vorgesehen ist.

Diese Maßnahmen haben den Vorteil, daß eine sichere, Software unabhängige fest verdrahtete Lösung geschaffen wird, bei der die Zuordnung einzelner Modulplätze für Eingangsmodule zu Modulplätzen für Ausgangsmodule fest vorgegeben ist und damit einfach in der Handhabung und kostengünstig ist. Obgleich eine feste Verdrahtung vorliegt, läßt sich ein sehr flexibles System aus Sicherheitsschaltgeräten aufbauen, wobei die Möglichkeiten der Zuordnung jedoch durch die feste Verdrahtung innerhalb eines vorgegebenen Rahmens beschränkt sind. Eine solche Lösung genügt jedoch in sehr vielen Fällen den gestellten Anforderungen.

In einer weiteren Ausgestaltung ist ein Steuermodul vorgesehen, das die Zuordnung von Eingangsmodulplätzen und Ausgangsmodulplätzen steuert.

Diese Maßnahme hat den Vorteil, daß die bei der fest verdrahteten Lösung vorgegebenen Grenzen der Flexibilität aufgehoben werden. Vielmehr erlaubt das Steuermodul eine beliebige Zuordnung von Eingangsmodulen zu Ausgangsmodulen. Vorzugsweise umfaßt das Steuermodul eine Steuervorrichtung mit einer Speichereinheit, in der eine die Zuordnung festlegende Zuordnungstabelle abgelegt ist. Vorzugsweise ist die Steuervorrichtung als Mikroprozessor bzw. Mikrocontroller ausgebildet, wobei ein Datenbus - vorzugsweise ein serieller Datenbus, bspw. ein serieller optischer Datenbus - die Verbindung der Steuervorrichtung mit den Modulplätzen übernimmt.

Die letzt genannten Maßnahmen führen insbesondere zu dem Vorteil, daß sich die Modulanordnung sehr einfach durch Hinzufügen weiterer Module skalieren läßt. Die neuen Module müssen lediglich an den bestehenden Datenbus angebunden werden.

Eine weitere Erhöhung der Flexibilität des gesamten Systems wird dann erreicht, wenn die Steuervorrichtung eine Erkennungseinheit umfaßt, die eine Positionierung der Module innerhalb der Modulreihe erkennt, wobei eine Zuordnungstabelle abhängig von der Plazierung der Ausgangsmodule und abhängig von einer relativen Zuordnungstabelle absolut ermittelt wird. D.h, daß die Zuordnungstabelle zunächst eine Zuordnung von Modulplätzen innerhalb der Modulreihe relativ zu den Ausgangsmodulen enthält. So könnte die relative Zuordnungstabelle beispielsweise die Zuordnung enthalten, daß alle Module links neben einem Ausgangsmodul diesem zugeordnet sind und alle Module rechts von dem letzten rechten Ausgangsmodul allen Ausgangsmodulen zugeordnet sind. Anhand der Belegung der Modulplätze innerhalb der Modulreihe mit Eingangs- und Ausgangsmodulen kann die Steuervorrichtung dann unter Zugrundelegung der relativen Zuordnungstabelle eine absolute Zuordnungstabelle bestimmen, in der die Zuordnung in absoluten Werten abgelegt ist, also bspw. Modul 1 wirkt auf Modul 4, etc.

Diese Maßnahmen führen zu einer größtmöglichen Flexibilität und Freiheit beim Aufbau eines modularen Sicherheitsschaltgeräte-Systems, das im übrigen auch sehr einfach skalierbar ist. Vorzugsweise ist eine Eingabeeinheit vorgesehen, die einer Eingabe und/oder Änderung der Zuordnungstabelle ermöglicht, so daß eine weitere Steigerung der Flexibilität des gesamten Systems erzielt wird.

Bei den Eingangsmodulen handelt es sich um Eingangskreise von bekannten Sicherheitsschaltgeräten, d.h. jenen Schaltkreisen, die die Signale von Sicherheitsgebern sicher auswerten. Bei den Ausgangskreisen handelt es sich um die Ausgangskontakte von Sicherheitsschaltgeräten, d.h. elektromechanisch arbeitenden oder elektronisch arbeitenden Schaltern, die von den Ausgangssignalen der Eingangskreise betätigt werden. Auch die Ausgangskreise sind dabei sicher aufgebaut. Es ist in diesem Zusammenhang bekannt, daß ein sicherer Aufbau bspw. durch Vorsehen zweier unabhängiger Kanäle oder eines Kanals plus Überprüfungseinheit erzielbar ist.

Weitere Vorteile und Ausgestaltungen der Erfindung ergeben sich aus der Beschreibung und der beiliegenden Zeichnung.

Es versteht sich, daß die vorstehend genannten und die nachstehend noch zu erläuternden Merkmale nicht nur in der jeweils angegebenen Kombination, sondern auch in anderen Kombinationen oder in Alleinstellung verwendbar sind, ohne den Rahmen der vorliegenden Erfindung zu verlassen.

Ausführungsbeispiele der Erfindung sind in der Zeichnung dargestellt und werden in der nachfolgenden Beschreibung näher erläutert. Es zeigen:
- Fig. 1: eine schematische Blockdarstellung einer erfindungsgemäßen Verwendung;
- Fig. 2: ein Schaltungsdiagramm einer möglichen Zuordnung von Eingangsmodulen und Ausgangsmodulen;
- Fig. 3: eine schematische Blockdarstellung einer Steuervorrichtung, die in einem Steuerungsmodul vorgesehen ist;
- Fig. 4: eine schematische perspektivische Darstellung einer Sicherheitsschaltgeräte-Modulanordnung entsprechend dem in Fig. 1 gezeigten Aufbau;
- Fig. 5: eine schematische Darstellung der Rückseite der in Fig. 4 gezeigten Sicherheitsschaltgeräte-Modulanordnung; und
- Fig. 6: eine schemahafte Blockdarstellung einer Sicherheitsschaltgeräte-Modulanordnung entsprechend einer weiteren Ausführungsform.

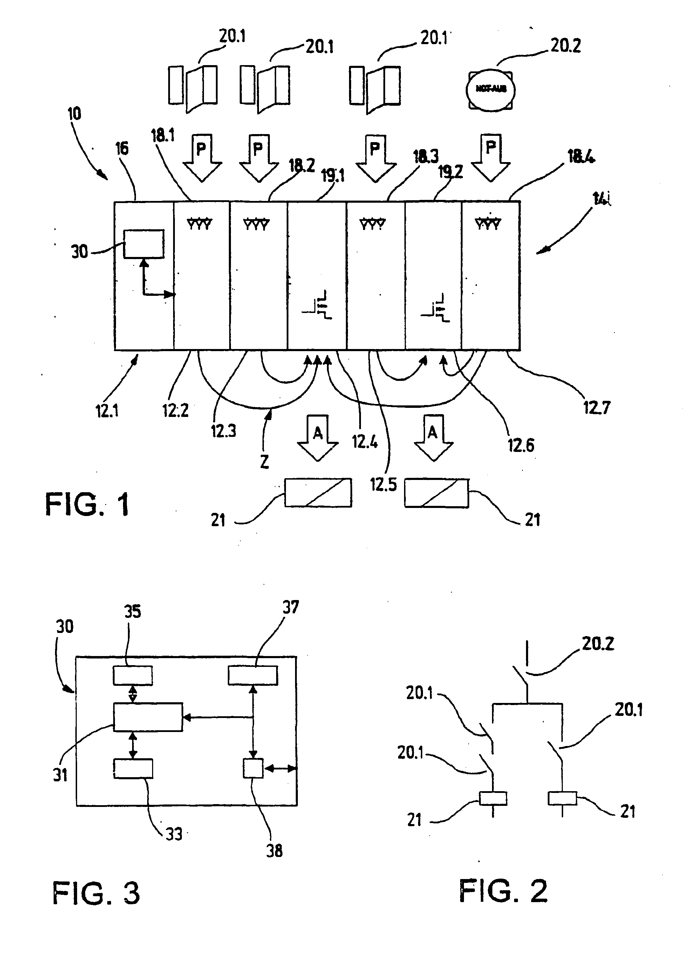

In Fig. 1 ist eine Sicherheitsschaltgeräte-Modulanordnung mit dem Bezugszeichen 10 bezeichnet. Diese Sicherheitsschaltgeräte-Modulanordnung (im folgenden kurz Modulanordnung genannt) umfaßt eine Vielzahl von in einer Reihe angeordneten Modulplätzen 12.1 bis 12.7, die im vorliegenden Ausführungsbeispiel jeweils ein Modul 14 aufnehmen. Insbesondere enthält der Modulplatz 12.1 ein Steuermodul 16, die Modulplätze 12.2, 12.3, 12.5 und 12.7 jeweils ein Eingangsmodul 18.1 bis 18.4, und die beiden Modulplätze 12.4 und 12.6 jeweils ein Ausgangsmodul 19.1 und 19.2. Die Eingangs- und Ausgangsmodule bilden somit eine Modulreihe, in der jedes Modul eine bestimmte Position bzw. einen bestimmten Modulplatz einnimmt.

Die Eingangsmodule 18.1, 18.2, 18.3 und 18.4 sind eingangsseitig mit Signalgebern verbunden, was mit Pfeilen P angedeutet ist. Bei den Signalgebern, die in Fig. 1 mit dem Bezugszeichen 20 gekennzeichnet sind, handelt es sich beispielsweise um Schutztürschalter 20.1 oder einen Not-Aus-Schalter 20.2. Im vorliegenden Ausführungsbeispiel ist der Not-Aus-Schalter 20.2 dem Eingangsmodul 18.4 und die anderen Schutztürschalter 20.1 den Eingangsmodulen 18.1, 18.2 und 18.3 zugeordnet.

Die Eingangsmodule 18 enthalten Auswerte- und Steuereinheiten, über die die Signale der Sicherheitsgeber sicher ausgewertet werden. Der grundsätzliche Aufbau solcher Eingangsmodule ist beispielsweise in "Maschinensicherheit", Winfried Gräf, Hüthig Verlag, 1997 offenbart. Ferner zeigt auch die Anmeldung DE 10011211 der vorliegenden Anmelderin den Aufbau solcher Eingangsmodule. Üblicherweise sind diese Eingangsmodule zweikanalig aufgebaut, um die geforderte Sicherheit bei der Auswertung der Eingangssignale zu erzielen.

Die beiden vorgesehenen Ausgangsmodule 19.1 und 19.2 umfassen üblicherweise elektromechanische oder elektronische Schaltelemente, die abhängig von zugeführten Eingangssignalen sicher zwischen zwei Schaltzuständen hin und her schalten. Das Ausgangssignal des jeweiligen Ausgangsmoduls 19.1, 19.2 wird einem Aktor zugeführt, was mit Pfeilen A angedeutet ist. Bei den Aktoren handelt es sich beispielsweise um Schütze 21, die die Energieversorgung beispielsweise eines Motors herstellen oder unterbrechen können.

Die Funktion der gesamten Sicherheitsschaltgeräte-Modulanordnung besteht nun darin, die Energieversorgung der den beiden Schütze zugeordneten Motoren zu unterbrechen, wenn der Not-Aus-Schalter 20.2 gedrückt wird, während lediglich einer der beiden Motoren von der Energieversorgung abgekoppelt wird, wenn einer der Schutztürschalter 20.1 betätigt wird. Das entsprechende Schaltdiagramm ist in Fig. 2 dargestellt. Die beiden Schütze 21 werden demnach über jeweils einen Strompfad versorgt, in denen jeweils der Not-Aus-Schalter 20.2 und zwei Schutztürschalter 2.1 bzw. ein Schutztürschalter 20.1 in Reihe geschaltet sind.

Es ergibt sich ein hierarchischer Aufbau der Schalter, da der Not-Aus-Schalter 20.2 auf beide Schütze 21 wirkt, während die Schutztürschalter 20.1 jeweils nur auf ein Schütz 21 wirken.

Im Hinblick auf die in Fig. 1 gezeigte Modulanordnung ist es erforderlich, daß die Ausgangssignale der Eingangsmodule 18.1, 18.2 und 18.4 auf das Ausgangsmodul 19.1 und die Ausgangssignale der Eingangsmodule 18.3 und 18.4 auf das Ausgangsmodul 19.2 wirken, um die in Fig. 2 angegebene Verknüpfung zu erzielen. Die vorgenannte Zuordnung der Eingangsmodule zu den Ausgangsmodulen ist mit Hilfe von Pfeilen Z graphisch dargestellt. Diese durch Pfeile Z angedeutete Zuordnung erfordert elektrische Signalleitungen, die Ausgangsanschlüsse der Eingangsmodule mit Eingangsanschlüssen der Ausgangsmodule verbinden. Mögliche Realisierungen solcher elektrischen Verbindungen werden im weiteren Verlauf der Beschreibung näher erläutert.

Das Steuermodul 16 umfaßt eine Steuervorrichtung 30, in der die gewünschte Zuordnung von Modulplätzen 12 für Eingangsmodule zu Modulplätzen 12 für Ausgangsmodule festgehalten ist. Eine Zuordnungstabelle, die die durch Pfeile Z gekennzeichnete Zuordnung definiert, könnte beispielsweise wie folgt aussehen:

| Eingang | | | | |
|---|---|---|---|---|
| Ausgang | 12.2 | 12.3 | 12.5 | 12.7 |
| 12.4 | V | V | - | V |
| 12.6 | | | V | V |

In dieser Tabelle steht "V" für eine Signalverbindung, d.h. daß beispielsweise zwischen dem Modulplatz 12.2 und dem für ein Ausgangsmodul vorgesehenen Modulplatz 12.4 eine Verbindung zur Übertragung von Signalen vorhanden ist. Entsprechend der angegebenen Zuordnungstabelle läßt sich somit ein Sicherheitsschaltgeräte-System aufbauen, bei dem unabhängig voneinander zwei Aktoren über die Ausgangsmodule 12.4 und 12.6 ansteuerbar sind, wobei das Ausgangsmodul im Modulplatz 12.4 über maximal drei UND-verknüpfte Signalgeber und das Ausgangsmodul in Modulplatz 12.6 über maximal zwei UND-verknüpfte Sicherheitsgeber betätigt werden.

Selbstverständlich ist es durchaus denkbar, einzelne Modulplätze für Eingangsmodule nicht zu besetzen, so daß im einfachsten Fall nur der Modulplatz 12.7 mit einem Eingangsmodul 18.4 bestückt ist, mit dem Ergebnis, daß beide Schütze 21 über den Not-Aus-Schalter 20.2 alleine betätigt werden können.

Das besondere der vorliegenden Modulanordnung 10 ist insbesondere darin zu sehen, daß die Zuordnung von Modulplätzen 12.2, 12.3, 12.5 und 12.7 für Eingangsmodule 18.1 bis 18.4 zu Modulplätzen 12.4 und 12.6 für Ausgangsmodule 19.1, 19.2 unabhängig von den tatsächlich eingesetzten Eingangsmodulen 18 vorgesehen ist. Der Benutzer kann somit baukastenartig ein System zusammenstellen, wobei lediglich die vorgegebene Zuordnungstabelle die Anzahl der verschiedenen Verknüpfungsmöglichkeiten einschränkt. Will der Benutzer beispielsweise ein Schütz 21 über zwei in Reihe geschaltete Sicherheitsgeber betätigen, wählt er die Modulplätze 12.2 und 12.3 für die Eingangsmodule und das Ausgangsmodul 19.1 im Modulplatz 12.4 zur Ansteuerung des entsprechenden Schützes 21. Will der Benutzer jedoch ein hierarchisches System aufbauen, bei dem zwei Schütze 21 über einen zentralen Not-Aus-Schalter 20.2 und jeweils über einen Türschalter 20.1 betätigbar sind, wählt er die Modulplätze 12.3 und 12.5 für jeweils ein Eingangsmodul und den Modulplatz 12.7 für ein dem Not-Aus-Schalter zugeordnetes Eingangsmodul 18.4, wobei die Ausgangsmodule 19.1, 19.2 in den Modulplätzen 12.4 und 12.6 vorgesehen sind.

Es zeigt sich also, daß sehr flexibel unterschiedliche Sicherheitsschaltgeräte-Systeme aufbaubar sind, wobei verschiedene Reihenschaltungen und Parallelschaltungen von Sicherheitsgebern denkbar sind. Selbstverständlich ist die in Fig. 1 gezeigte Modulanordnung 10 skalierbar, d.h. auch auf mehr als die gezeigten vier Eingangsmodule und zwei Ausgangsmodule erweiterbar.

In dem vorgenannten Ausführungsbeispiel waren die Modulplätze für die Ausgangsmodule 19.1 und 19.2 festgelegt auf die Modulplätze 12.4 und 12.6. Selbstverständlich ist es auch denkbar, die Modulanordnung so aufzubauen, daß die Modulplätze für die Ausgangsmodule 19.1 und 19.2 ebenfalls frei wählbar sind. In diesem Fall muß jedoch die oben genannte absolute Zuordnungstabelle aufgegeben werden und statt dessen eine relative Zuordnungstabelle in der Steuervorrichtung 30 abgespeichert werden. Unter "relativ" ist zu verstehen, daß die Zuordnung der Modulplätze relativ zu der Position der eingesetzten Ausgangsmodule in der Modulreihe angegeben wird. Eine Umsetzung der oben genannten absoluten Tabelle in eine relative Zuordnungstabelle würde mit Worten beispielsweise ausgedrückt werden:
a) Alle Modulplätze links vom ersten Ausgangsmodul 19.1 sind diesem zugeordnet
b) alle Modulplätze zwischen dem ersten und dem zweiten Ausgangsmodul 19.1, 19.2 sind dem zweiten Ausgangsmodul 19.2 zugeordnet
c) alle Modulplätze rechts vom zweiten Ausgangsmodul 19.2 sind beiden Ausgangsmodulen 19.1, 19.2 zugeordnet.

In mathematischer Form könnte diese Zuordnung wie folgt aussehen:
a) MP < MP-A1 → A1
b) MP-A1 < MP < MP-A2 → A2
c) MP > MP-A2 → A1 und A2

Wobei MP für die Modulplatznummer und MP-A1 für die Modulplatznummer des Ausgangsmoduls A1 und MP-A2 für die Modulplatznummer des Ausgangsmoduls A2 steht.

Aus dieser relativen Zuordnungstabelle läßt sich eine absolute Zuordnungstabelle, wie sie oben dargestellt ist, errechnen, sobald die beiden Ausgangsmodule 19.1 und 19.2 an entsprechende Modulplätze angebracht sind. Die Steuervorrichtung 30 ermittelt beim Start des Systems diejenigen Modulplätze, in denen Ausgangsmodule angeordnet sind und berechnet anhand dessen dann die absolute Zuordnungstabelle. Um die Erkennung von Ausgangsmodulen und Eingangsmodulen für die Steuervorrichtungen 30 zu ermöglichen, besitzt jedes Modul 18, 19 eine Kennung, anhand derer die Steuervorrichtung den Typ des Moduls bestimmen kann. Ferner bestimmt die Steuervorrichtung die Nummer des Modulplatzes innerhalb der Modulreihe, in dem das jeweilige Eingangs- oder Ausgangsmodul aufgenommen ist. Somit ist in der Steuervorrichtung ein exaktes Abbild aller Modulplätze und damit der gesamten Modulreihe mit den eingeschobenen Eingangs- bzw. Ausgangsmodulen vorhanden. Diese Information zusammen mit der berechneten absoluten Zuordnungstabelle ermöglicht es dem Steuermodul 16, die Ausgangssignale der Eingangsmodule 18.1 bis 18.4 gemäß der in der Zuordnungstabelle angegebenen Verknüpfungsregel an das zugeordnete Ausgangsmodul weiterzuleiten.

Es zeigt sich, daß dieses System, bei dem auf festgelegte Modulplätze für Ausgangsmodule verzichtet wird, sehr viel flexibler ist. So wäre es beispielsweise denkbar, die beiden Ausgangsmodule 19.1 und 19.2 an den Modulplätzen 12.3 bzw. 12.5 vorzusehen, und die Eingangsmodul 18.2 und 18.3 an den Modulplätzen 12.4 und 12.6. Dies hätte dann bei der oben genannten relativen Zuordnungstabelle zur Folge, daß der Not-Aus-Schalter 20.2 UND-verknüpft mit einem Schutztürschalter 20.1 wäre, und beide Schütze 21 mit dem Not-Aus-Schalter 20.2 sowie mit dem Schutztürschalter 20.1 betätigen würden. Damit könnten beide Motoren durch Öffnen der entsprechenden Schutztür oder des Not-Aus-Schalters zum Stillstand gebracht werden.

In Fig. 3 ist zur Erläuterung die Steuervorrichtung 30 des Steuermoduls 16 als Blockdiagramm dargestellt. Die Steuervorrichtung 30 umfaßt eine Steuereinheit 31, die beispielsweise als Mikroprozessor ausgebildet ist. An der Steuereinheit 31 ist ein Speicher 33 mit beliebigem Zugriff (RAM) und ein Festwertspeicher 35 (ROM, EEPROM, etc.) über entsprechende Leitungen angeschlossen. Ferner umfaßt die Steuervorrichtung 30 eine Eingabeeinheit 37, die die Eingabe und Änderung von Daten zuläßt, die im RAM-Speicher 33 abgelegt sind. Zur Steuerung der Kommunikation über einen nicht dargestellten Daten- und Signalbus, ist ein Busbaustein 38 vorgesehen. Im einfachsten Fall ist der Bus als Schieberegister realisiert, bei dem jedes Modul eine Zelle des Schieberegisters ist, deren Inhalt über Taktsignale zu der Steuereinheit bzw. den Busbaustein 38 verschoben wird.

Wie zuvor erwähnt, enthält die Steuervorrichtung 30 eine relative Zuordnungstabelle. Diese ist in dem ROM-Speicher 35 abgelegt, so daß diese auch bei Energieausfall nicht verlorengeht. Im Gegensatz dazu wird die von der Steuereinheit 31 berechnete absolute Zuordnungstabelle in dem RAM-Speicher 33 abgelegt. Darüber hinaus steuert die Steuereinheit 31 den Modul-Erkennungsvorgang, bei dem der Reihe nach jeder Modulplatz 12.2 bis 12.7 daraufhin abgefragt wird, ob ein Modul eingesteckt ist und welcher Art (Eingangs- oder Ausgangsmodul, Typ des Moduls, bspw. welche Art von Sicherheitsgeber ist angeschlossen, etc.) dieses Modul ist.

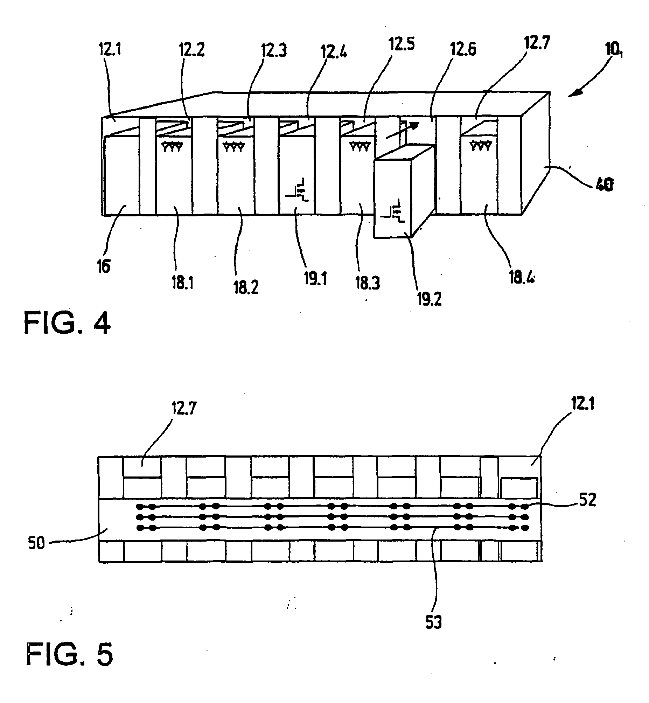

In Fig. 4 ist die Modulanordnung 10 in perspektivischer Ansicht dargestellt. Diese Modulanordnung 10 umfaßt ein schematisch dargestelltes Gehäuse 40, in dem einzelne Modulplätze 12.1 bis 12.7 physisch vorgesehen sind. Die Bestückung der Modulplätze 12.1 bis 12.7 entspricht der in Fig. 1 gezeigten dort ausführlich beschriebenen Bestückung, so daß auf eine nochmalige Beschreibung verzichtet wird.

Die einzelnen Module 18, 19 lassen sich in einfacher Art und Weise von vorne in den jeweiligen Modulplatz 12 einschieben, wie dies bei dem Ausgangsmodul 19.2 graphisch verdeutlicht ist. An der Rückseite der Module 18, 19 sind vorzugsweise Steckkontakte vorgesehen, die in entsprechende Steckkontaktaufnahmen eingreifen. Diese Steckkontaktaufnahmen sind an einer Leiterplatte 50 vorgesehen, die sich über die gesamte Breite an der Rückseite des Gehäuses 40 erstreckt. In der in Fig. 5 dargestellten Rückansicht ist diese Platine 50 zu erkennen. Ferner sind die Steckkontaktaufnahmen an jedem Modulplatz 12 schematisch angedeutet und mit dem Bezugszeichen 52 gekennzeichnet. Auf der Platine 50 verlaufen die zur Versorgung der einzelnen Module erforderlichen Leitungen, insbesondere jedoch der Daten- und Signalbus, wobei zur Veranschaulichung einzelne wenige Leitungen dargestellt und mit dem Bezugszeichen 53 bezeichnet sind.

Es ergibt sich aus Fig. 4, daß die Modulanordnung 10 in einfacher Art und Weise den Aufbau eines hierarchischen Schaltgeräte-Systems ermöglicht. Insbesondere kann das System sehr einfach bei Bedarf umgebaut und damit an neue Gegebenheiten angepaßt werden. Darüber hinaus eröffnet die vorgenannte relative Zuordnungstabelle eine sehr einfache Möglichkeit, verschiedene Eingangsmodule in unterschiedlicher Weise verschiedenen Ausgangsmodulen zuzuordnen. Dabei ist es nicht mehr erforderlich, die Verdrahtung der Eingangs- und Ausgangsmodule zu verändern.

Eine gegenüber der in Fig. 4 gezeigten Gehäusevariante flexiblere Lösung zur Aufnahme von Modulen besteht darin, eine sog. Hutschiene innerhalb eines Schaltschranks vorzusehen, an der die Module beliebig angebracht werden können. Damit existieren keine fest vorgegebenen Modulplätze mehr, was eine Verbindung der einzelnen Module untereinander mittels fester Verdrahtung beispielsweise mittels der in Fig. 5 gezeigten Platine nicht ermöglicht. Statt dessen erfolgt die Verbindung der Module untereinander über ein serielles synchrones Bussystem, wobei ein Modul jeweils mit den benachbarten Modulen über entsprechende Signalleitungen verbunden ist. Die Zuordnung der Eingangsmodule zu den Ausgangsmodulen erfolgt in diesem Fall über die bereits erwähnte relative Zuordnungstabelle, die in dem Steuermodul 16 abgelegt ist. Über den Datenbus ist das Steuermodul 16 in der Lage, die Modulplätze bzw. die Modulpositionen der Eingangsmodule und der Ausgangsmodule innerhalb der Modulreihe zu erkennen und - wie zuvor erläutert - die absolute Zuordnungstabelle zu berechnen.

Folglich spielt es keine Rolle, ob die Eingangsmodule oder die Ausgangsmodule in definierten Modulplätzen oder beispielsweise beliebig an einer Hutschiene innerhalb eines Schaltschranks angebracht sind.

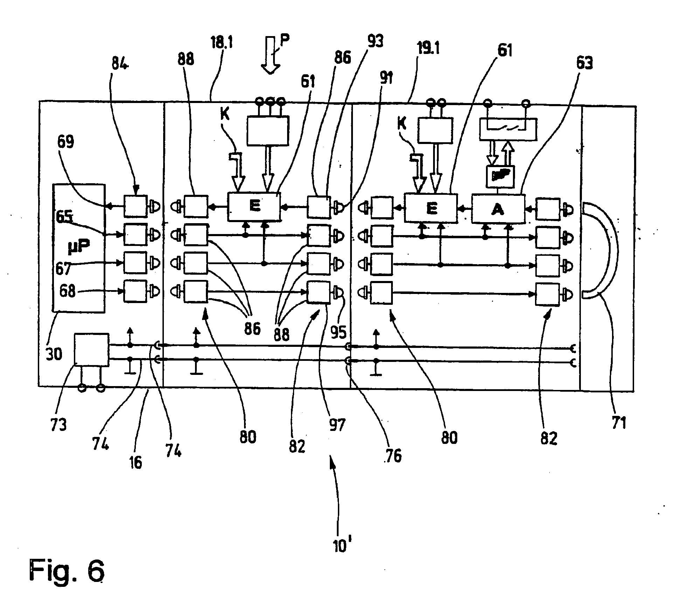

In Fig. 6 ist ein Ausschnitt einer Modulanordnung 10' dargestellt, die sich hinsichtlich ihrer Funktionalität nicht von der bereits erläuterten Modulanordnung 10 unterscheidet. Der Unterschied dieser Modulanordnung 10' zu dem bereits erläuterten Modul 10 besteht in der Art der Daten- bzw. Signalübertragung von einem Modul zum anderen.

Gegenüber der beschriebenden drahtgebundenen Buslösung erfolgt bei der Modulanordnung 10' gemäß Fig. 6 eine Übertragung der Daten auf optischem Weg. Hierfür weisen die Eingangsmodule 18 als auch die Ausgangsmodule 19 jeweils zwei Sende/Empfangseinheiten 80, 82 auf. Das Steuermodul 16 hingegen umfaßt lediglich eine Sende/Empfangseinheit 84.

Die beiden Sende/Empfangseinheiten 80 umfassen drei Empfangselemente 86 sowie ein Sendeelement 88. Im Gegensatz dazu umfassen die Sende/Empfangseinheiten 82 und 84 drei Sendeelemente 88 und ein Empfangselement 86.

Jedes der Empfangselemente 86 umfaßt einen Infrarotsensor 91 und eine Verstärkerstufe 93, die das Ausgangssignal des Infrarotsensors 91 verstärkt.

Jedes Sendeelement 88 umfaßt einen Infrarotsender, vorzugsweise in Form einer Infrarot-LED 95 und eine zur Ansteuerung der LED 95 dienende Treiber-Stufe 97.

Die Sende/Empfangseinheiten 80 sind im vorliegenden Ausführungsbeispiel innerhalb der Eingangs- bzw. Ausgangsmodule links angeordnet, während die Sende/Empfangseinheiten 82 in den Modulen rechts angeordnet sind. Gleiches gilt auch für die Sende/Empfangseinheit 84 im Steuermodul 16. Um eine Übertragung von Daten von einem Modul zum benachbarten Modul zu ermöglichen, sind in den Seitenwänden der Module Öffnungen für die Infrarotsender und Infrarotempfänger vorgesehen. Sind die Module in einer Modulreihe Seitenwand an Seitenwand angeordnet, liegt eine Sende/Empfangseinheit 80 eines Moduls einer Sende/Empfangseinheit 82 bzw. 84 des benachbarten Moduls gegenüber, so daß eine optische Verbindung zwischen den Infrarotempfängern und den Infrarotsendern entsteht. Über eine entsprechende modulinterne Verbindung der Sende/Empfangseinheit 80 mit der Sende/Empfangseinheit 82 läßt sich auf diese Weise ein Bussystem innerhalb der Modulreihe aufbauen.

Zur Datenübertragung über den optischen Datenbus von und zu der Steuereinrichtung 30 ist es notwendig, daß jedes Modul 18 und 19 über entsprechende Register zur Speicherung von Daten verfügt. Im vorliegenden Ausführungsbeispiel umfaßt das Eingangsmodul 18.1 ein Eingangsschieberegister 61, das ein Signal vom angeschlossenen Sicherheitsgeber 20 speichert.

Das Ausgangsmodul 19 umfaßt ebenfalls ein Eingangsschieberegister 61, sowie ein Ausgangsschieberegister 63, in dem ein zur Steuerung des Schützes 21 vorgesehenes Signal gespeichert wird.

Die einzelnen Schieberegister 61, 63 der in der Modulreihe angeordneten Eingangs- und Ausgangsmodule bilden ein Schieberegister, das über die Steuervorrichtung 30 gesteuert wird. Die Steuervorrichtung 30 kann über einen Ausgang 65 ein Taktsignal an die Module 18, 19 übermitteln, das dafür sorgt, daß ein in einem Schieberegister 61, 63 abgelegtes Datum zu dem nächsten Schieberegister in Richtung der Steuervorrichtung 30 geschoben wird. Über einen Ausgang 67 der Steuervorrichtung 30 kann ein Übernahmesignal an die Module 18, 19 übermittelt werden, das dafür sorgt, daß ein am jeweiligen Schieberegister anliegendes Signal gespeichert wird.

Ferner umfaßt die Steuervorrichtung 30 einen Datenausgang 68, über den Daten an die Module 18, 19 übermittelt werden und einen Dateneingang 69, dem die in den Schieberegistern liegenden Daten zugeführt werden. Somit umfaßt das vorliegende Bussystem zwei Steuerleitungen, die an den Ausgängen 65 und 67 der Steuervorrichtung 30 anliegen, sowie zwei Datenleitungen, die an dem Ausgang 68 bzw. dem Eingang 69 anliegen. Um eine Verbindung der beiden Datenleitungen am Ende der Modulreihe zu ermöglichen, ist im vorliegenden Fall ein Koppelelement 71 in Form eines Lichtleiters angebracht.

Die Energieversorgung der einzelnen Module 18, 19 erfolgt über ein im Steuermodul 16 vorgesehenes Netzteil 73, von dem zwei Versorgungsleitungen 74 ausgehen. Jedes der Module 16, 18, 19 weist entsprechende Steckkontakte 76 auf, um die Versorgungsleitungen 74 durch alle Module hindurchzuführen und damit die entsprechende Versorgung zu gewährleisten.

Wie bereits im Zusammenhang mit den ersten Ausführungsbeispielen beschrieben, besitzt jedes Modul 18, 19 eine Kennung, die dem Steuermodul zugeführt wird. Die jeweilige Kennung ist in einem Modul 18, 19 hardwaremäßig gelöst, beispielsweise durch eine Widerstandsschaltung. In Figur 6 sollen die Pfeile K andeuten, daß den beiden Eingangsschieberegistern 61 die jeweilige Kennungs-Information zugeführt wird, die über den Bus dem Steuermodul weitergegeben wird.

Es versteht sich, daß die in den Fig. 1 und 6 gezeigten Ausführungsbeispiele rein erläuternden Charakter besitzen und den Rahmen der Erfindung nicht einschränken. Vielmehr sind andere Ausführungsformen durchaus denkbar. So ist es beispielsweise möglich, das Steuermodul 16 einzusparen, und die Verknüpfungstabelle in Form einer festen Verdrahtung der einzelnen Modulplätze 12 zu realisieren. Es ist klar, daß diese Lösung gegenüber dem zuvor beschriebenen Ausführungsbeispiel eine eingeschränkte Flexibilität besitzt. Dennoch ist sie für viele Anwendungsfälle ausreichend.

Auch die in Fig. 5 gezeigte Platine 50 zur elektrischen Verbindung der einzelnen Module läßt sich in anderer Art und Weise realisieren, die dem Durchschnittsfachmann geläufig ist.

## Patentansprüche

1. Verwendung einer Sicherheitsschaltgeräte-Modulanordnung mit zumindest einem Eingangsmodul (18) zum Verarbeiten von Signalen eines Sicherheitsgebers (20) und zum Erzeugen von Ausgangssignalen, und mit zumindest zwei Ausgangsmodulen (19; 19.1, 19.2) zum Ansteuern von Aktoren (21) abhängig von den Ausgangssignalen, wobei Ausgangsmodulsignale des jeweiligen Ausgangsmoduls (19.1, 19.2) jeweils einem Aktor zuführbar sind, so dass zwei Aktoren (21) über die Ausgangsmodule (19.1, 19.2) unabhängig voneinander ansteuerbar sind, wobei das Eingangsmodul ein zweikanalig aufgebauter Eingangskreis eines Sicherheitsschaltgerätes ist und eine Auswerte- und Steuereinheit enthält, über die die Signale des Sicherheitsgebers (20) sicher ausgewertet werden, und wobei die Ausgangsmodule (19) sicher aufgebaute Ausgangskreise von Sicherheitsschaltgeräten sind, die jeweils zwei unabhängige Kanäle beinhalten, wobei das Eingangsmodul (18) und die Ausgangsmodule (19) in einer Reihe angeordnet sind und eine Modulreihe bilden, in der jedes Modul (18, 19) eine bestimmte Position einnimmt, und wobei das Eingangsmodul (18) zumindest einem Ausgangsmodul (19) zugeordnet ist, so daß dieses Ausgangsmodul den jeweils angeschlossenen Aktor abhängig von dem Ausgangssignal des zugeordneten Eingangsmoduls (18) steuert, wobei eine Zuordnung des Eingangsmoduls (18) zu dem ersten, dem zweiten oder beiden Ausgangsmodulen (19) abhängig von der Position des Eingangsmoduls (18) innerhalb der Modulreihe erfolgt, derart dass ein Benutzer eine Verknüpfung der Signale des Sicherheitsgebers (20) durch entsprechende Auswahl der Position des Eingangsmoduls (18) innerhalb der Modulreihe festlegt.

2. Verwendung nach Anspruch 1, wobei zumindest drei Eingangsmodulplätze (12.2, 12.3, 12.5, 12.7) zur Aufnahme von jeweils einem Eingangsmodul (18) und zumindest ein erster und ein zweiter Ausgangsmodulplatz (12.4, 12.6) zur Aufnahme von jeweils einem Ausgangsmodul (19) vorgesehen ist, wobei zumindest ein Eingangsmodulplatz (12.2) dem ersten Ausgangsmodulplatz (12.4), zumindest ein weiterer Eingangsmodulplatz (12.5) dem zweiten Ausgangsmodulplatz (12.6) und zumindest ein weiterer Eingangsmodulplatz (12.7) dem ersten und dem zweiten Ausgangsmodulplatz (12.4, 12.6) zugeordnet ist.

3. Verwendung nach Anspruch 2, wobei jeder Eingangsmodulplatz (12.2, 12.3, 12.5, 12.7) einen Ausgangsanschluß (12.4, 12.6) und jeder Ausgangsmodulplatz einen Eingangsanschluß aufweist, wobei entsprechend der Zuordnung von Eingangsmodul- zu Ausgangsmodulplätzen eine elektrische Verbindung zwischen dem jeweiligen Ausgangsanschluß des Eingangsmodulplatzes und dem Eingangsanschluß des Ausgangsmodulplatzes vorgesehen ist.

4. Verwendung nach Anspruch 1 oder 2, wobei ein Steuermodul (16) vorgesehen ist, daß die Zuordnung von Eingangsmodulen zu Ausgangsmodulen steuert.

5. Verwendung nach Anspruch 4, wobei das Steuermodul (16) eine Steuervorrichtung (30) mit einer Speichereinheit (33, 35) aufweist, in der eine die Zuordnung festlegende Zuordnungstabelle abgelegt ist.

6. Verwendung nach Anspruch 5, wobei die Steuervorrichtung (30) als Mikroprozessor ausgebildet ist, und ein Datenbus (53) zur Verbindung der Steuervorrichtung (30) mit den Modulplätzen (12.2-12.7) vorgesehen ist.

7. Verwendung nach Anspruch 6, wobei der Datenbus als optischer Datenbus (80, 82, 84) ausgebildet ist, wobei jedes Eingangs- (18) und jedes Ausgangsmodul optische Sende- (88) und Empfangsmittel (86) umfaßt, die eine Datenverbindung zu einem benachbarten Modul (16, 18, 19) herstellen.

8. Verwendung nach Anspruch 5, wobei die Steuervorrichtung (30) eine Erkennungseinheit umfaßt, die die Positionierung der Eingangs- und Ausgangsmodul (18, 19) innerhalb der Modulreihe erkennt, wobei die Zuordnungstabelle abhängig von der Plazierung der Ausgangsmodule (19) und abhängig von einer relativen Zuordnungstabelle absolut ermittelt wird.

9. Verwendung nach Anspruch 5, wobei eine Eingabeeinheit (37) vorgesehen ist, die eine Eingabe und/oder Änderung der Zuordnungstabelle ermöglicht.

10. Verwendung nach Anspruch 2 und 5, wobei Eingangsmodulplätze (12.2, 12.3, 12.5, 12.7) und Ausgangsmodulplätze (12.4, 12.6) identisch als Modulplätze (12) aufgebaut sind und zur Aufnahme von Eingangs- und Ausgangsmodulen (18, 19) geeignet sind.

## Claims

1. Use of a safety switching device module arrangement comprising at least one input module (18) for processing signals from a safety transmitter (20) and for generating output signals, and comprising at least two output modules (19; 19.1, 19.2) for driving actuators (21) in response to the output signals, wherein the output module signals of the respective output module (19.1, 19.2) each can be fed to an actuator such that two actuators (21) can be driven independently from one another via said output modules (19.1, 19.2), wherein the input module (18) is an input circuit of a safety switching device designed in a two-channel manner and wherein the input module comprises an evaluation and control unit for safely evaluating the signals from the safety transmitter (20), and wherein the output modules (19) are safely designed output circuits of safety switching devices each comprising two independent channels, wherein the input module (18) and the output modules (19) are arranged in a series forming a series of modules where each module (18, 19) has a defined position, and wherein the input module (18) is associated with at least one output module (19) such that said output module drives the respectively connected actuator in response to the output signal of the associated input module (18), wherein an association of the input module (18) with the first, the second or both output modules (19) is achieved on the basis of the position of the input module (18) within the series of modules in such a manner that a logical interconnection of the signals from the safety transmitter (20) is defined by corresponding choice of the position of the input module (18) within the series of modules.

2. The use of claim 1, wherein at least three input module spaces (12.2, 12.3, 12.5, 12.7) are provided each for accommodating an output module (19), at least one input module space (12.2) being associated with the first output module space (12.4), at least one further input module space (12.5) being associated with the second output module space (12.6), and at least one further input module space (12.7) being associated with the first and the second output module space (12.4, 12.5).

3. The use of claim 2, wherein each input module space (12.2, 12.3, 12.5, 12.7) has an output terminal (12.4, 12.6), and each output module space has an input terminal, wherein an electrical connection between the respective output terminal of the input module space and the input terminal of the output module space is provided in accordance with the association of the input module spaces to the output module spaces.

4. The use of claim 1 or 2, wherein a control module (16) is provided which controls the association of input modules and output modules.

5. The use of claim 4, wherein the control module (16) comprises a control device (30) having a memory unit (33, 35), in which an association table defining the associations is stored.

6. The use of claim 5, wherein the control device (30) is implemented as a microprocessor, and a data bus (53) is provided to connect the control device (30) to the module spaces (12.2-12.7).

7. The use of claim 6, wherein the data bus is implemented as an optical data bus (80, 82, 84), with each input module (18) and each output module comprising optical transmitting (88) and receiving means (86), which provide a data connection to an adjacent module (16, 18, 19).

8. The use of claim 5, wherein the control device (30) comprises a detection unit which detects the positioning of the input and output modules (18, 19) within the series of modules, wherein the association table is absolutely determined on the basis of the placing of the output modules (19) and on the basis of a relative association table.

9. The use of claim 5, wherein an input unit (37) is provided which permits to input and/or to change the association table.

10. The use of claim 2 and 5, wherein input module spaces (12.2, 12.3, 12.5, 12.7) and output module spaces (12.4, 12.6) are implemented identically as module spaces (12) and are adapted to accommodate input or output modules (18, 19).

## Revendications

1. Utilisation d'un arrangement modulaire de contacteurs de sécurité comprenant au moins un module d'entrée (18) pour traiter des signaux d'un codeur de sécurité (20) et pour générer des signaux de sortie, et comprenant au moins deux modules de sortie (19 ; 19.1, 19.2) pour commander des actionneurs (21) en fonction des signaux de sortie, les signaux de module de sortie du module de sortie (19.1, 19.2) respectif pouvant respectivement être acheminés à un actionneur, de sorte que deux actionneurs (21) peuvent être commandés indépendamment l'un de l'autre par le biais des modules de sortie (19.1, 19.2), le module d'entrée étant un circuit d'entrée constitué de deux canaux d'un contacteur de sécurité et contenant une unité d'interprétation et de commande par le biais de laquelle les signaux du codeur de sécurité (20) sont interprétés avec certitude, et les modules de sortie (19) étant des circuits de sortie à construction sécurisée de commutateurs de sécurité qui contiennent respectivement deux canaux indépendants, le module d'entrée (18) et les modules de sortie (19) étant disposés en une rangée et formant une rangée de module dans laquelle chaque module (18, 19) occupe une position donnée, et le module d'entrée (18) étant associé à au moins un module de sortie (19), de sorte que ce module de sortie commande l'actionneur respectivement raccordé en fonction du signal de sortie du module d'entrée (18) associé, une association du module d'entrée (18) au premier, au deuxième ou aux deux modules de sortie (19) étant effectuée à l'intérieur de la rangée de modules en fonction de la position du module d'entrée (18), afin qu'un utilisateur fixe une combinaison des signaux du codeur de sécurité (20) par une sélection en conséquence de la position du module d'entrée (18) à l'intérieur de la rangée de modules.

2. Utilisation selon la revendication 1, au moins trois emplacements de module d'entrée (12.2, 12.3, 12.5, 12.7) destinés à accueillir chacun un module d'entrée (18) et au moins un premier et un deuxième emplacement de module de sortie (12.4, 12.6) destinés à accueillir chacun un module de sortie (19) étant prévus, au moins un emplacement de module d'entrée (12.2) étant associé au premier emplacement de module de sortie (12.4), au moins un emplacement de module d'entrée supplémentaire (12.5) au deuxième emplacement de module de sortie (12.6) et au moins un emplacement de module d'entrée supplémentaire (12.7) au premier et au deuxième emplacement de module de sortie (12.4, 12.6).

3. Utilisation selon la revendication 2, chaque emplacement de module d'entrée (12.2, 12.3, 12.5, 12.7) présentant une borne de sortie (12.4, 12.6) et chaque emplacement de module de sortie une borne d'entrée, une liaison électrique entre la borne de sortie correspondante de l'emplacement de module d'entrée et la borne d'entrée de l'emplacement de module de sortie étant prévue conformément à l'association entre les emplacements de module d'entrée et de module de sortie.

4. Utilisation selon la revendication 1 ou 2, un module de commande (16) étant prévu, lequel commande l'association des modules d'entrée aux modules de sortie.

5. Utilisation selon la revendication 4, le module de commande (16) présentant un dispositif de commande (30) avec une unité de mémoire (33, 35) dans laquelle est stockée une table d'association qui détermine l'association.

6. Utilisation selon la revendication 5, le dispositif de commande (30) étant réalisé sous la forme d'un microprocesseur et un bus de données (53) étant prévu pour relier le dispositif de commande (30) aux emplacements de module (12.2 - 12.7).

7. Utilisation selon la revendication 6, le bus de données étant réalisé sous la forme d'un bus de données optique (80, 82, 84), chaque module d'entrée (18) et chaque module de sortie comprenant des moyens d'émission (88) et de réception (86) optiques qui établissent une liaison de données avec un module voisin (16, 18, 19).

8. Utilisation selon la revendication 5, le dispositif de commande (30) comprenant une unité de reconnaissance qui reconnaît le positionnement du module d'entrée et de sortie (18, 19) à l'intérieur de la rangée de modules, la table d'association étant déterminée de manière absolue en fonction du positionnement des modules de sortie (19) et en fonction d'une table d'association relative.

9. Utilisation selon la revendication 5, une unité de saisie (37) étant prévue, laquelle permet une saisie et/ou une modification de la table d'association.

10. Utilisation selon la revendication 2 et 5, les emplacements de module d'entrée (12.2, 12.3, 12.5, 12.7) et les emplacements de module de sortie (12.4, 12.6) étant construits de manière identique sous la forme d'emplacements de module (12) et étant conçus pour accueillir des modules d'entrée et de sortie (18, 19).
